# FASCICULE DE BREVET EUROPEEN

(11) **EP 3 918 204 B1**
(45) Date de publication et mention de la délivrance du brevet: **25.03.2026**
(21) Numéro de dépôt: 20707503.7
(22) Date de dépôt: 30.01.2020
(51) Int. Cl.: F04D 29/16, F04D 29/02, F04D 29/52, F01D 11/12, F01D 25/24

(54) **CARTER DE SOUFFLANTE POUR UNE TURBOMACHINE D'AERONEF**
LÜFTERGEHÄUSE FÜR EINE FLUGZEUGTURBOMASCHINE
FAN CASING FOR AN AIRCRAFT TURBOMACHINE

(30) Priorité: 30.01.2019 FR 1900835
(43) Date de publication de la demande: 08.12.2021
(73) Titulaire: SAFRAN AIRCRAFT ENGINES, 75015 Paris (FR)
(72) Inventeur: FIORE, Vincent, Pascal, 77550 Moissy-cramayel (FR); BOUROLLEAU, Clément, 77550 MOISSY-CRAMAYEL (FR); BRANCO, Alexandre, 77550 MOISSY-CRAMAYEL (FR); DOMINGUES, Serge, 77550 MOISSY-CRAMAYEL (FR); SIRAJ, Anwer, 77550 MOISSY-CRAMAYEL (FR)
(74) Mandataire: Gevers & Orès
(86) Numéro de dépôt international: PCT/FR2020/050148
(87) Numéro de publication internationale: WO 2020/157438

(56) Documents cités:
- EP-A2- 1 113 146
- WO-A1-2014/066229
- WO-A1-2016/027030
- WO-A1-2017/109403
- FR-A1- 2 913 053
- FR-A1- 3 037 854
- GB-A- 2 442 112
- US-A1- 2008 284 109
- US-A1- 2014 367 920

## Description

### Domaine technique de l'invention

La présente invention concerne le domaine des carters de soufflante de turbomachine d'aéronef.

### Arrière-plan technique

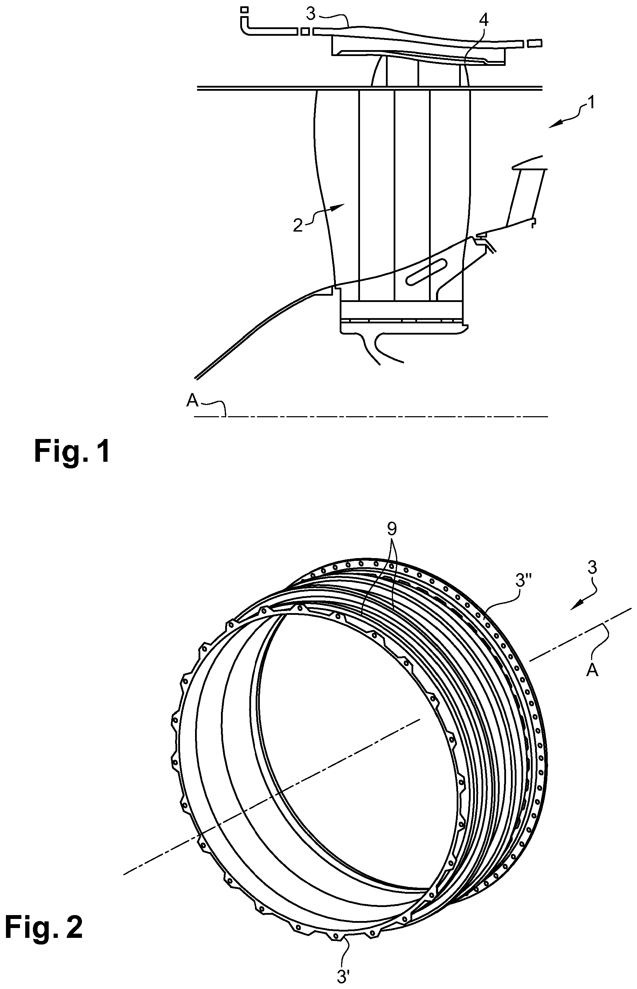

La figure 1 représente partiellement une soufflante d'une turbomachine d'aéronef.

De façon classique, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

La soufflante 1 comporte une roue à aubes 2 qui est entourée par un carter 3 de soufflante, encore appelé carter de rétention du fait de sa fonction de rétention des aubes en cas de rupture de celles-ci, ou en cas d'entrée de débris dans la soufflante.

Comme cela est visible sur la figure 2, le carter de soufflante 3 a une forme générale cylindrique d'axe de révolution A. Il comprend une bride annulaire de fixation 3', 3" à chacune de ses extrémités axiales. Ces brides 3', 3" sont utilisées pour fixer le carter 3 à des parois annulaires de la nacelle de la turbomachine.

Le carter de soufflante 3 s'étend donc autour de la roue à aubes 2 de soufflante. Il comprend une surface cylindrique interne sur laquelle est prévue une couche annulaire 4 de matière abradable. Cette couche annulaire 4 de matière abradable s'étend autour et à faible distance radiale des aubes, qui peuvent en fonctionnement frotter contre le matériau et l'user par frottement. Ceci permet d'optimiser les jeux radiaux entre les aubes et le carter de soufflante 3 qui l'entoure et donc de limiter les fuites de gaz aux sommets ou extrémités radialement externes des aubes, et ainsi optimiser les performances de la turbomachine. Un exemple est décrit dans le document FR-A1-2913053.

Dans la technique actuelle, cette couche annulaire de matière abradable 4 est constituée d'une cartouche de support abradable pleine ou présentant une structure en nid d'abeille. Cette cartouche est généralement rivetée ou vissée sur le carter de soufflante.

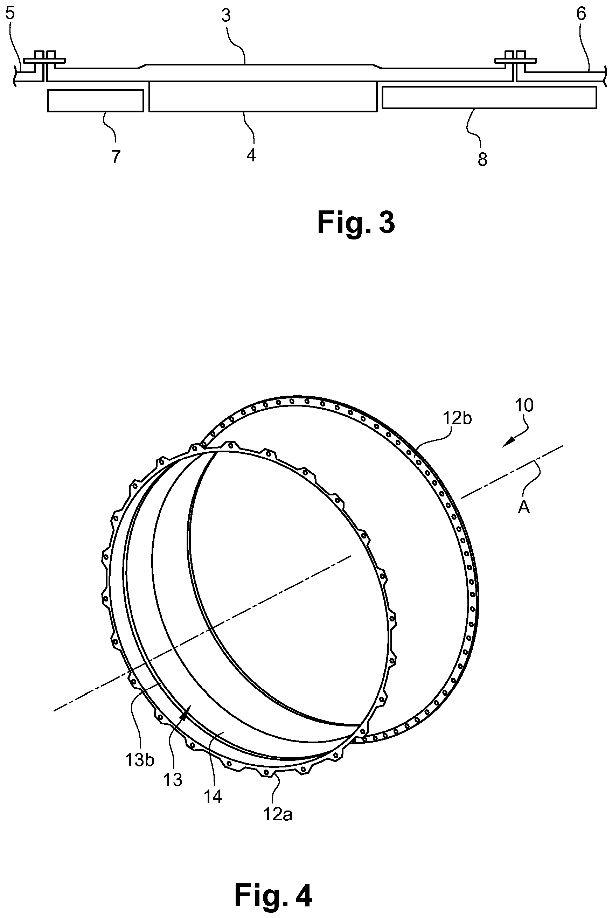

La figure 3 est une coupe à caractère schématique illustrant un carter de soufflante 3 selon l'art antérieur.

Le carter de soufflante est lié d'une part à une manche d'entrée d'air 5, et, d'autre part, à une virole de carter intermédiaire 6. Il porte également une zone acoustique amont 7 et une zone acoustique avale 8.

Le carter de soufflante 3 comporte également une couche de support abradable 4 sous forme de cartouche, positionnée sur une face interne du carter de soufflante 3, entre la zone acoustique amont 7 et la zone acoustique avale 8.

Un inconvénient de cette cartouche de support abradable 4 est qu'elle augmente localement l'épaisseur du carter de soufflante 3 et, par conséquent, le poids de ce carter de soufflante 3.

En plus de cette fonction de rétention, le carter de soufflante 3 est également conçu pour :
- assurer une continuité mécanique (des efforts et des moments) entre la manche d'entrée d'air 5 et la virole de carter intermédiaire 6 ;
- permettre la fixation des panneaux d'une veine aérodynamique délimitée par la cartouche de support abradable 4, la zone acoustique amont 7 et la zone acoustique avale 8 assurant ainsi une continuité de la veine aérodynamique ;
- permettre la fixation d'équipements et de supports connus en soi ;
- tenir les spécifications de règlementation au feu et aux fuites ;
- permettre la continuité du courant électrique pour la tenue à la foudre, etc.

De plus, en fonctionnement, les aubes 2 de soufflante créent une sollicitation dynamique comprenant des poches tournantes de pression-dépression. Cette sollicitation dynamique excite le carter de soufflante et engendre une accélération et une déformation du carter de soufflante. En effet, le carter de soufflante peut avoir une réponse forcée à ces sollicitations dynamiques pouvant entrainer sa détérioration et diminue ainsi sa durée de vie.

Le carter de soufflante doit donc présenter une résistance mécanique lui permettant d'assurer toutes ces fonctions et de résister aux sollicitations dynamiques en fonctionnement de la soufflante. A cet effet, dans l'état de la technique actuel, le carter de soufflante comporte, sur une face externe, des raidisseurs 9 métalliques assurant le renforcement de la structure du carter de soufflante (figure 2). Ces raidisseurs font généralement partie intégrante du carter, ce dernier devenant alors complexe et couteux à produire. De plus, ceci ajoute encore au poids du carter de soufflante.

US 2014/367920 A1, FR 3 037 854 A1, GB 2 442 112 A, WO 2014/066229 A1, WO 2016/027030 A1 et WO 2017/109403 A1 sont également des documents pertinents de la technique antérieure.

La présente invention propose une solution simple, efficace et économique aux inconvénients précités de la technique antérieure.

### Résumé de l'invention

A cet effet, l'invention concerne un carter de soufflante pour une turbomachine d'aéronef, comportant un corps annulaire s'étendant autour d'un axe A et équipé d'une bride annulaire de fixation à chacune de ses extrémités axiales, et un revêtement annulaire en matériau abradable, ledit corps est réalisé dans un matériau composite, le carter comprend en outre un raidisseur annulaire assurant le renforcement de la structure de carter, le raidisseur annulaire étant disposé à l'intérieur dudit corps et qui portant ledit revêtement, ce raidisseur présentant une section sensiblement en forme de oméga et comportant une paroi annulaire dont une face radialement externe est écartée radialement du corps de manière que l'espace annulaire ménagé entre la face radialement externe et une face radialement interne dudit corps est maintenu vide, et dont une face radialement interne reçoit ledit revêtement, le raidisseur comportant des pattes annulaires de fixation de ladite paroi audit corps.

Le carter de soufflante selon l'invention présente de nombreux avantages. Notamment, il propose d'assurer la fonction de support abradable tout en présentant une masse réduite et en proposant une capacité de rétention et une raideur globale améliorées. Cette forme en oméga du raidisseur permet d'offrir un bon compromis entre les contraintes inertielles du carter de soufflante et les contraintes d'intégration du raidisseur du carter de soufflante.

De préférence et avantageusement, le corps est réalisé à partir d'une préforme de fibres tissées et densifiée par une résine polymérique.

De telle fibres permettent d'obtenir une solution à la fois légère et résistante.

Avantageusement, chacune des pattes a en section une forme générale en L et comporte une première branche annulaire de fixation au corps, et une seconde branche annulaire de liaison de la paroi à la branche de fixation, permettant la solidarisation du raidisseur et du corps de carter de soufflante.

Selon un premier exemple de réalisation, la branche de liaison est sensiblement perpendiculaire à la paroi et/ou à la branche de fixation.

Selon un autre exemple de réalisation, la branche de liaison est inclinée par rapport à la paroi et/ou à la branche de fixation.

Ainsi, l'absorption d'énergie par le carter de soufflante en fonctionnement des aubes de soufflante est plus importante, conférant ainsi une plus grande résistance et une meilleure robustesse au carter de soufflante.

Avantageusement, le raidisseur a une épaisseur sensiblement constante, permettant sa fabrication aisée par des technique de pliage, drapage et détourage connues.

Avantageusement, la paroi a un diamètre qui varie le long dudit axe A.

De la sorte, le raidisseur peut épouser la forme du carter de soufflante pour une meilleure intégration.

De préférence et avantageusement, les branches de liaison des pattes de fixation ont des hauteurs ou dimensions radiales par rapport audit axe A, qui sont différentes.

Ainsi, le raidisseur épouse la forme du carter de soufflante pour une meilleure intégration.

L'invention concerne encore un procédé de réalisation d'un carter de soufflante tel que décrit ci-dessus, caractérisé en ce qu'il comporte :
a) une étape de réalisation du corps en matériau composite,
b) une étape de réalisation du raidisseur, par exemple en plis de carbone,
c) une étape de pose et de fixation, par exemple par collage, du raidisseur à l'intérieur du corps, et
d) une étape de pose et de fixation du revêtement abradable sur la face radialement interne du raidisseur.

Le carter de soufflante ainsi réalisé présente un gain de masse par rapport aux carters de soufflante de l'art antérieur, notamment par rapport aux solutions vissées ou rivetées de l'art antérieur, et avec des caractéristiques mécaniques améliorées.

L'invention concerne encore une turbomachine d'aéronef, comportant un carter de soufflante présentant au moins l'une quelconque des caractéristiques susmentionnées.

Comme indiqué précédemment, une telle turbomachine, du fait de la présence d'un carter de soufflante selon l'invention, présente un gain en réduction de masse, une amélioration en raideur et un gain en temps de fabrication et, par conséquent, un gain en terme de coût.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] La figure 1 déjà discutée montre partiellement une vue en coupe d'une soufflante d'une turbomachine d'aéronef selon l'état de la technique ;
[Fig. 2] La figure 2 déjà discutée montre une vue en perspective d'un carter de soufflante selon l'état de la technique ;
[Fig. 3] La figure 3 déjà discutée montre une coupe partielle à caractère schématique d'un carter de soufflante selon l'état de la technique ;
[Fig. 4] La figure 4 est une vue en perspective d'un carter de soufflante selon l'invention ;
[Fig. 5] La figure 5 est une vue en coupe en perspective d'un exemple de réalisation du raidisseur équipant le carter de soufflante selon l'invention ;
[Fig. 6] La figure 6 est une vue en coupe du raidisseur illustré à la figure 5 ;
[Fig. 7] La figure 7 montre une vue en coupe en perspective d'un exemple de réalisation du carter de soufflante selon l'invention équipé d'un raidisseur tel qu'illustré à la figure 5 ;
[Fig. 8] La figure 8 montre une vue en coupe du carter de soufflante illustré à la figure 7 ;
[Fig. 9] La figure 9 est une vue de détail d'un autre exemple de réalisation du raidisseur équipant le carter de soufflante selon l'invention ;
[Fig. 10] La figure 10 est encore une vue de détail d'un autre exemple de réalisation du raidisseur équipant le carter de soufflante selon l'invention.

### Description détaillée de l'invention

En référence à la figure 4, le carter 10 présente un corps annulaire 11 de forme générale sensiblement cylindrique d'axe de révolution A.

Dans le présent exposé et dans les revendications, les termes « interne » et « externe » et « radial » sont définis par rapport à l'axe A du carter 10. Les termes « amont » et « aval » sont utilisés en référence au sens d'écoulement des flux de gaz dans une turbomachine.

Le carter 10 comprend une bride annulaire de fixation 12a, 12b à chacune de ses extrémités axiales. Ces brides 12a, 12b sont utilisées pour fixer le carter 10 à des parois annulaires d'une nacelle de turbomachine qu'il équipe. Dans le cas d'un carter annulaire de soufflante, ces brides 12a, 12b sont utilisées pour fixer le carter 10 d'une part à une manche d'entrée d'air de la turbomachine, et, d'autre part, à une virole de carter intermédiaire de la turbomachine (non représentées).

Le corps annulaire 11 est réalisé dans un matériau composite. Par exemple, il est réalisé à partir d'une préforme de fibres tissées, par exemple tridimensionnelles, tissées, et densifiée par une résine polymérique.

Le corps annulaire 11 du carter 10 comprend une surface annulaire radialement interne 11' destinée à recevoir un revêtement annulaire en matière abradable. C'est-à-dire, la surface annulaire radialement interne 11' du corps 11 est destinée à recevoir un raidisseur annulaire 13 recouvert d'une couche de revêtement en matériau abradable 14.

Le raidisseur 13 comporte une paroi annulaire 13a présentant une face radialement externe 13a' et une face radialement interne 13a" et des pattes 13b annulaires de fixation de la paroi 13a du raidisseur 13 au corps 11 du carter 10.

La face radialement externe 13a' de la paroi 13a du raidisseur est disposée en regard de la face radialement interne 11' du corps 11 du carter 10 et est écartée radialement du corps 11 du carter 10, de sorte à ménager un espace annulaire E.

La face radialement interne 13a" de la paroi 13a du raidisseur 13 reçoit la couche de revêtement abradable 14.

Chacune des pattes 13b annulaires de fixation de la paroi 13a du raidisseur 13 au corps 11 du carter 10 présente une section de forme générale en L et comporte une première branche 13b' annulaire de fixation au corps 11 du carter 10, et une seconde branche 13b" annulaire de liaison de la paroi 13a du raidisseur 13 à ladite branche de fixation 13b'.

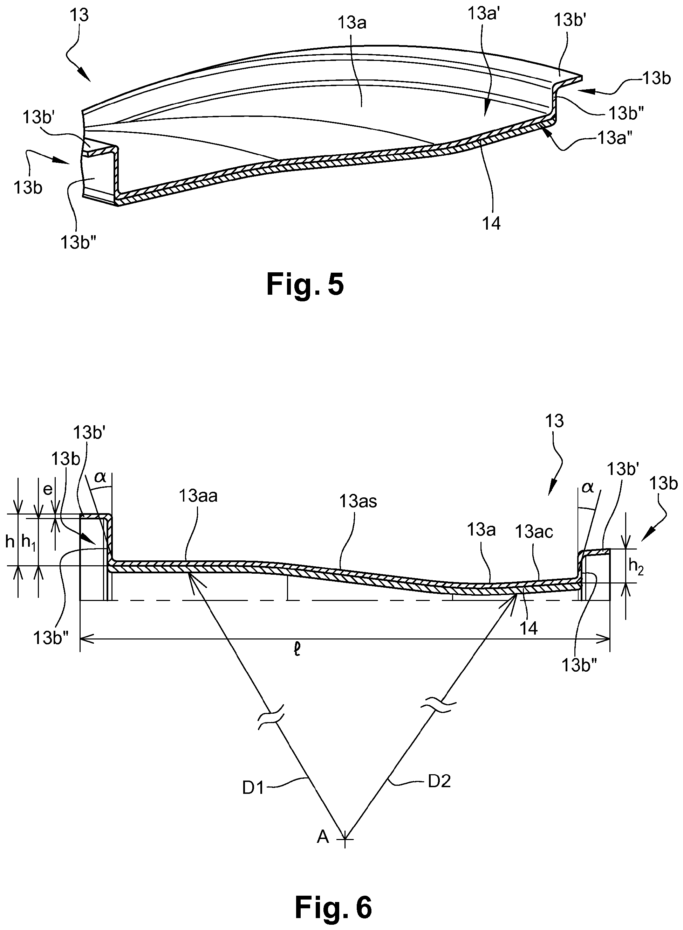

Selon les exemples de réalisation visibles aux figures 5 à 8, la branche de liaison 13b" est sensiblement perpendiculaire à la paroi 13a du raidisseur 13 et/ou à la branche de fixation 13b'.

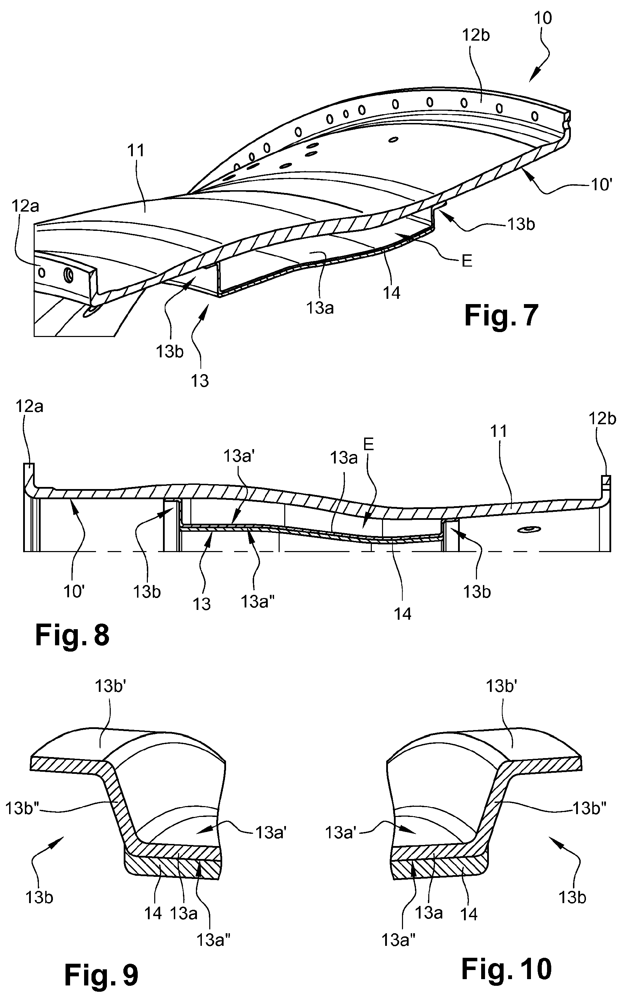

Selon les exemples de réalisation illustrés aux figures 9 et 10, la branche de liaison 13b" est inclinée par rapport à ladite paroi 13a du raidisseur 13 et/ou à la branche de fixation 13.

La branche de liaison 13b" peut ainsi être inclinée d'un angle a par rapport à une normale à la face radialement externe 13a' de la paroi 13a du raidisseur 13, cet angle α étant compris entre 10° et 45°. Les angles d'inclinaison de chacune branches de liaison 13b" des brides 13b pouvant être identiques ou différents.

Le raidisseur annulaire 13 présente ainsi une section sensiblement en oméga (« Ω ») (en capitale).

Le raidisseur 13 est ici situé dans une portion centrale de la surface annulaire radialement interne 11' du corps 11 du carter 10 et est destiné à s'étendre en regard du sommet des aubes de la roue de soufflante.

Le raidisseur 13 s'étend à 360°, en continu, sur la surface annulaire radialement interne 11' du corps 11. Le raidisseur 13 présente une longueur ou dimension axiale I, le long de l'axe A, qui représente de 40 à 60% de la longueur du carter 10 de soufflante et, dans l'exemple représenté, qui représente 50% de la longueur du carter 10 de soufflante. Le raidisseur 13 présente par exemple une dimension axiale I de l'ordre de 400 mm et une hauteur h de l'ordre de 30 mm. Il présente encore une épaisseur e sensiblement constante. Par exemple, le raidisseur présente une épaisseur e de l'ordre de 5 mm.

Le raidisseur 13 est, par exemple, réalisé en plis de carbone lui conférant une importante robustesse mécanique, à savoir un gain en raideur par des caractéristiques mécaniques améliorées. Le raidisseur 13 présente ainsi une masse de l'ordre de 5,5 kg.

Selon l'exemple de réalisation illustré mais nullement limitatif, la paroi 13a du raidisseur 13 présente un diamètre qui varie le long de l'axe A. Notamment, la paroi 13a du raidisseur 13 comporte une portion amont 13aa de diamètre D1 et une portion aval 13ac de diamètre D2, les portions amont 13aa et aval 13ac étant reliées par une portion intermédiaire 13ab. Le diamètre D1 de la portion amont 13aa est supérieur au diamètre D2 de la portion aval 13ac, la diamètre de la portion intermédiaire 13ab variant donc de manière décroissante entre un diamètre D1 et un diamètre D2.

Comme cela est visible sur la figure 8, la section de la paroi 13a du raidisseur 13 reproduit ainsi sensiblement la section du corps 11 du carter de soufflante 10.

De manière intéressante mais nullement limitative, les branches de liaison 13" des pattes de fixation 13b ont des hauteurs h1, h2 ou dimensions radiales par rapport à l'axe A de révolution du carter 10 de soufflante, qui sont différentes. Par exemple, la branche de liaison 13b" de la patte de fixation 13b à l'extrémité latérale annulaire amont de la portion amont 13aa de la paroi 13a du raidisseur 13 présente une hauteur h1 supérieure à la hauteur h2 de la branche de liaison 13b" de la patte de fixation 13b à l'extrémité latérale annulaire aval de la portion aval 13ac de la paroi 13a du raidisseur 13.

La forme en oméga (« Ω ») du raidisseur 13 lui confère une importante robustesse mécanique et une capacité de rétention permettant une absorption plus importante de l'énergie en fonctionnement de la turbomachine, tout en maintenant vide l'espace annulaire E ménagé entre la face externe 13a' de la paroi annulaire 13a du raidisseur 13 et la surface annulaire radialement interne 11' du corps 11 du carter 10, ajoutant encore au gain en réduction de masse du carter de soufflante 10 selon l'invention.

De plus, le raidisseur 13 présente ainsi une forme simple et peu coûteuse à fabriquer, contrairement aux solutions en nid d'abeille de l'art antérieur nécessitant un pré-usinage du revêtement abradable en nid d'abeille, une étape de drapage, la pose du revêtement abradable en nid d'abeille, une étape de détourage, une étape d'usinage, et une étape de collage du revêtement abradable en nid d'abeille sur le carter de soufflante. De plus, le revêtement en nid d'abeille constitue une âme pleine contrairement au raidisseur 13 de la présente invention, ce dernier nécessitant donc moins de matière première pour sa fabrication, ce qui constitue encore un gain économique.

Le procédé de réalisation d'un carter 10 de soufflante selon l'invention, est quant à lui simple, rapide et donc peu coûteux à mettre en œuvre, il comporte les étapes suivantes :
a) une étape de réalisation du corps 11 en matériau composite,
b) une étape de réalisation du raidisseur 13, par exemple en plis de carbone,
c) une étape de pose et de fixation, par exemple par collage, du raidisseur 13 à l'intérieur du corps 11, et
d) une étape de pose et de fixation du revêtement abradable 14 sur la face radialement interne 13a" du raidisseur 13.

Par exemple, le corps 11 et le raidisseur 13 sont réalisés par des étapes de drapage et de détourage.

De plus, la solidarisation par collage du raidisseur 13 et du corps 11 du carter 10 permet un gain en réduction de masse de l'ensemble par rapport à une solution vissée ou rivetée.

Les étapes a) et b) peuvent être réalisées simultanément, et l'ordre des étapes c) et d) peut être interverti.

Afin de respecter les interfaces de montage du raidisseur 13 et du corps 11 de carter 10 non usinée, directement en sortie de moulage, il peut être envisagé d'utiliser un outillage permettant de conformer le raidisseur 13 aux bonnes dimensions par rapport au carter 10 de soufflante auquel il est destiné. Il est également envisagé de caractériser une méthode de positionnement du raidisseur 13 sur le carter 10 de soufflante de type laser ou gabarit de montage.

Ainsi, selon l'invention, la tenue mécanique du carter 10 de soufflante est améliorée de même que le temps de cycle global du procédé de fabrication.

La présente invention concerne encore une turbomachine d'aéronef comportant d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines, la soufflante comportant une roue à aubes entourée par un carter 10 de soufflante selon l'invention.

## Revendications

1. Carter (10) de soufflante pour une turbomachine d'aéronef, comportant un corps (11) annulaire s'étendant autour d'un axe (A) et équipé d'une bride annulaire de fixation (12a, 12b) à chacune de ses extrémités axiales, et un revêtement (14) annulaire en matériau abradable, ledit corps (11) est réalisé dans un matériau composite, **caractérisé en ce que** le carter (10) comprend en outre un raidisseur annulaire (13) assurant le renforcement de la structure de carter, le raidisseur annulaire (13) étant disposé à l'intérieur dudit corps (11) et portant ledit revêtement (14), ce raidisseur (13) présentant une section sensiblement en forme de oméga et comportant une paroi annulaire (13a) dont une face radialement externe (13a') est écartée radialement du corps (11) de manière que l'espace annulaire (E) ménagé entre la face radialement externe (13a) et une face radialement interne (11') dudit corps (11) est maintenu vide, et dont une face radialement interne (13a") reçoit ledit revêtement (14), le raidisseur (13) comportant des pattes (13b) annulaires de fixation de ladite paroi audit corps.

2. Carter (10) de soufflante selon la revendication précédente, **caractérisé en ce que** ledit corps (11) est réalisé à partir d'une préforme de fibres tissées et densifiée par une résine polymérique.

3. Carter (10) de soufflante selon l'une des revendications précédentes, **caractérisé en ce que** chacune desdites pattes (13b) a en section une forme générale en L et comporte une première branche (13b') annulaire de fixation au corps (11), et une seconde branche (13b") annulaire de liaison de la paroi (13a) à ladite branche de fixation (13b').

4. Carter (10) de soufflante selon la revendication précédente, **caractérisé en ce que** ladite branche de liaison (13b") est sensiblement perpendiculaire à ladite paroi (13a) et/ou à ladite branche de fixation (13b').

5. Carter (10) de soufflante selon la revendication 3, **caractérisé en ce que** ladite branche de liaison (13b") est inclinée par rapport à ladite paroi (13a) et/ou à ladite branche de fixation (13b').

6. Carter (10) de soufflante selon l'une des revendications précédentes, **caractérisé en ce que** ledit raidisseur (13) a une épaisseur (e) sensiblement constante.

7. Carter (10) de soufflante selon l'une des revendications précédentes, **caractérisé en ce que** ladite paroi (13a) a un diamètre qui varie le long dudit axe (A).

8. Carter (10) de soufflante selon l'une des revendications précédentes, **caractérisé en ce que** les branches de liaison (13b") des pattes de fixation (13b) ont des hauteurs (h1, h2) ou dimensions radiales par rapport audit axe (A), qui sont différentes.

9. Procédé de réalisation d'un carter (10) de soufflante selon l'une quelconque des revendications précédentes, **caractérisé en ce qu'**il comporte :
a) une étape de réalisation du corps (11) en matériau composite,
b) une étape de réalisation du raidisseur (13), par exemple en plis de carbone,
c) une étape de pose et de fixation, par exemple par collage, du raidisseur (13) à l'intérieur du corps (11), et
d) une étape de pose et de fixation du revêtement abradable (14) sur la face radialement interne (13a") du raidisseur (13).

10. Turbomachine d'aéronef **caractérisée en ce qu'**elle comporte un carter (10) de soufflante selon l'une des revendications 1 à 8.

## Patentansprüche

1. Gebläsegehäuse (10) für ein Flugzeug-Turbotriebwerk, das einen ringförmigen Körper (11) beinhaltet, der sich um eine Achse (A) herum erstreckt und mit einem ringförmigen Befestigungsflansch (12a, 12b) an jedem seiner axialen Enden ausgerüstet ist, und eine ringförmig Beschichtung (14) aus einem abreibbaren Werkstoff, wobei der Körper (11 ) aus einem Verbundwerkstoff hergestellt ist, **dadurch gekennzeichnet, dass**
das Gehäuse (10) weiter eine ringförmige Versteifung (13) umfasst, die für eine Verstärkung der Gehäusestruktur sorgt, wobei die ringförmige Versteifung (13) im Inneren des Körpers (11) angeordnet ist und die Beschichtung (14) trägt, wobei diese Versteifung (13) einen im Wesentlichen Omega-förmigen Querschnitt aufweist und eine ringförmige Wand (13a) beinhaltet von der eine radial äußere Seite (13a') radial vom Körper (11) beabstandet ist, sodass der Ringraum (E), der zwischen der radial äußeren Seite (13a) und einer radial inneren Seite (11') des Körpers (11) gebildet ist, leer gehalten wird, und von der eine radial innere Seite (13a") die Beschichtung (14) aufnimmt, wobei die Versteifung (13) ringförmige Laschen (13b) zum Befestigen der Wand am Körper beinhaltet.

2. Gebläsegehäuse (10) nach dem vorstehenden Anspruch, **dadurch gekennzeichnet, dass** der Körper (11 ) aus einem Rohling hergestellt ist, der aus gewebten Fasern, und durch ein Polymerharz verdichtet ist.

3. Gebläsegehäuse (10) nach einem der vorstehenden Ansprüche, **dadurch gekennzeichnet, dass** jede der Laschen (13b) im Querschnitt eine allgemeine L-Form aufweist und eine erste ringförmige Verzweigung (13b') zum Befestigen am Körper (11 ), und eine zweite ringförmige Verzweigung (13b") zum Verbinden der Wand (13a) mit der ersten Befestigungsverzweigung (13b') beinhaltet.

4. Gebläsegehäuse (10) nach dem vorstehenden Anspruch, **dadurch gekennzeichnet, dass** die Verbindungsverzweigung (13b") im Wesentlichen senkrecht zur Wand (13a) und/oder zur Befestigungsverzweigung (13b') steht.

5. Gebläsegehäuse (10) nach Anspruch 3, **dadurch gekennzeichnet, dass** die Verbindungsverzweigung (13b") in Bezug zur Wand (13a) und/oder zur Befestigungsverzweigung (13b') geneigt ist.

6. Gebläsegehäuse (10) nach einem der vorstehenden Ansprüche, **dadurch gekennzeichnet, dass** die Versteifung (13) eine im Wesentlichen konstante Dicke (e) aufweist.

7. Gebläsegehäuse (10) nach einem der vorstehenden Ansprüche, **dadurch gekennzeichnet, dass** die Wand (13a) einen Durchmesser aufweist, der sich entlang der Achse (A) ändert.

8. Gebläsegehäuse (10) nach einem der vorstehenden Ansprüche, **dadurch gekennzeichnet, dass** die Verbindungsverzweigungen (13b") der Befestigungslaschen (13b) radiale Höhen (h1, h2) oder Abmessungen in Bezug zur Achse (A) aufweisen, die unterschiedlich sind.

9. Verfahren zur Herstellung eines Gebläsegehäuses (10) nach einem der vorstehenden Ansprüche, **dadurch gekennzeichnet, dass** es beinhaltet:
a) einen Schritt zur Herstellung des Körpers (11) aus Verbundwerkstoff,
b) einen Schritt zur Herstellung der Versteifung (13), beispielsweise aus Carbon-Falzen,
c) einen Schritt zum Anbringen und Befestigen, beispielsweise durch Verkleben, der Versteifung (13) im Inneren des Körpers (11), und
d) einen Schritt zum Anbringen und Befestigen der abreibbaren Beschichtung (14) auf der radial inneren Seite (13a") der Versteifung (13).

10. Luftfahrzeug-Turbotriebwerk, **dadurch gekennzeichnet, dass** es ein Gebläsegehäuse (10) nach einem der Ansprüche 1 bis 8 beinhaltet.

## Claims

1. A fan casing (10) for an aircraft turbomachine, comprising an annular body (11) extending about an axis (A) and equipped with an annular fastening flange (12a, 12b) at each of its axial ends, and an annular coating (14) made from abradable material, said body (11) being made from a composite material, **characterized in that** the fan casing (10) further comprises an annular stiffener (13) ensuring the reinforcement of the structure of the fan casing, the annular stiffener (213 being arranged inside said body (11) and carrying said coating (14), this stiffener (13) said stiffener (13) having a substantially omega-shaped cross-section and comprising an annular wall (13a), a radially outer face (13a') of which is separated radially from the body (11) so that the annular space (E) formed between the radially external face (13a) and a radially internal face (11') of said body (11) is kept empty, and a radially inner face (13a") of which receives said coating (14), the stiffener (13) comprising annular tabs (13b) for fastening said wall to said body.

2. The fan casing (10) according to the preceding claim, **characterised in that** said body (11) is made from a preform of woven fibres and densified by a polymeric resin.

3. The fan casing (10) according to one of the preceding claims, **characterised in that** each of said tabs (13b) is generally L-shaped in cross-section and comprises a first annular leg (13b') for fastening to the body (11), and a second annular leg (13b") for connecting the wall (13a) to said fastening leg (13b').

4. The fan casing (10) according to the preceding claim, **characterised in that** said connecting leg (13b") is substantially perpendicular to said wall (13a) and/or to said fastening leg (13b').

5. The fan casing (10) according to claim 3, **characterized in that** said connecting leg (13b") is inclined with respect to said wall (13a) and/or to said fastening leg (13b').

6. The fan casing (10) according to any one of the preceding claims, **characterized in that** said stiffener (13) has a substantially constant thickness (e).

7. The fan casing (10) according to one of the preceding claims, **characterised in that** said wall (13a) has a diameter which varies along said axis (A).

8. The fan casing (10) according to any one of the preceding claims, **characterized in that** the connecting legs (13b") of the fastening tabs (13b) have different heights (h1, h2) or radial dimensions with respect to said axis (A).

9. A method for producing a fan casing (10) according to any one of the preceding claims, **characterised in that** it comprises:
a) a step for producing the body (11) in composite material,
b) a step for producing the stiffener (13), for example in carbon folds,
c) a step for placing and fastening, for example by gluing, the stiffener (13) inside the body (11), and
d) a step for placing and fastening the abradable coating (14) on the radially inner face (13a") of the stiffener (13).

10. An aircraft turbomachine, **characterised in that** it comprises a fan casing (10) according to one of claims 1 to 8.
